# EUROPEAN PATENT SPECIFICATION

(11) **EP 3 369 599 B1**
(45) Date of publication and mention of the grant of the patent: **11.05.2022**
(21) Application number: 18159734.5
(22) Date of filing: 02.03.2018
(51) Int. Cl.: B60K 15/01, B60K 13/04, B60K 15/04, B60K 15/05, B60K 15/03

(54) **PIPING STRUCTURE FOR VEHICLE**
ROHRLEITUNGSSTRUKTUR FÜR EIN FAHRZEUG
STRUCTURE DE TUYAUTERIE POUR VÉHICULE

(30) Priority: 03.03.2017 JP 2017040414
(43) Date of publication of application: 05.09.2018
(73) Proprietor: Mitsubishi Jidosha Kogyo Kabushiki Kaisha, Tokyo 108-8410 (JP); Mitsubishi Jidosha Engineering Kabushiki Kaisha, Aichi 444-8501 (JP)
(72) Inventor: Yamamoto, Masahiro, Tokyo, 108-8410 (JP); Sano, Takayuki, Tokyo, 108-8410 (JP); Inden, Kazuto, Okazaki-shi, Aichi, 444-8501 (JP)
(74) Representative: Vossius & Partner Patentanwälte Rechtsanwälte mbB

(56) References cited:
- FR-A1- 3 034 052
- JP-A- H08 296 630
- US-A1- 2014 103 039

## Description

### BACKGROUND OF THE INVENTION

### 1. Field of the Invention

The present invention relates to a piping structure for a vehicle in which a first replenishment opening and a second replenishment opening are provided on a side portion of the vehicle.

### 2. Description of the Related Art

Conventionally, among vehicles provided with an exhaust purification system that reduces exhaust gas components of the engine to purify them, a vehicle has been known that is mounted with a tank of an additive agent having a reduction action on an object to be purified. When the object to be purified is a nitrogen oxide (NOx), an additive agent such as a urea aqueous solution or an ammonia aqueous solution is stored inside the tank. Moreover, regarding the disposition position of the tank, for example, it is proposed to set it below the floor of the vehicle (see JP-B-4826612). By this layout, not only space in the vehicle cabin is secured but the comfort of the vehicle cabin is prevented from being deteriorated by the leakage of the additive agent.

In the vehicle described in JP-B-4826612, a water feed opening for an additive agent is disposed on the floor surface in the vehicle cabin, and the replenishment of the additive agent is carried out in the vehicle cabin. On the other hand, there are cases where baggage is loaded in the vehicle cabin, so that there are cases where excellent workability is not obtained. Moreover, when the possibility of spill of the additive agent during the replenishment is considered, a structure is desired in which the replenishment of the additive agent can be performed from outside the vehicle cabin. For example, it is considered to dispose the water feed opening in the neighborhood of the oil filler opening of the vehicle and connect the water feed opening and the tank by a water feed pipe.

However, if the water feed pipe is routed between the outer panel and the inner panel of both side surfaces of the vehicle in order that the water feed pipe is not seen from the vehicle cabin, the vehicle interior space is narrowed by the amount of the space occupied by the water feed pipe, so that the space utilization efficiency can decrease. In particular, when the tank of the additive agent is disposed below the floor of the vehicle, the length of the water feed pipe is large, so that it is difficult to improve the space utilization efficiency. Moreover, repair is difficult when the water feed pipe is broken between the outer panel and the inner panel, so that excellent maintainability is not obtained.

Another piping structure for a vehicle is known from FR 3 034 052 A1.

### SUMMARY OF THE INVENTION

An object of the present application is to provide a piping structure for a vehicle invented in accordance with the above-described problem and intended to improve the space utilization efficiency and the maintainability.

According to the present invention, a piping structure for a vehicle as defined in claim 1 is proposed. Preferred embodiments of the invention are defined in the dependent claims.

By routing one pipe on the front side of the wheel and routing the other on the rear side of the wheel in the wheel house and coupling the two filler necks through the neck bracket above the wheel house, the structural strength of the pipes can be enhanced while the space utilization efficiency and the maintainability are improved.

### BRIEF DESCRIPTION OF THE DRAWINGS

FIG. 1 is a perspective view of a vehicle to which a piping structure of the present embodiment is applied.
FIG. 2 is a conceptual side view showing the internal structure of a wheel house of the vehicle.
FIG. 3 is a longitudinal cross-sectional view of the wheel house.
FIG. 4 is a perspective view showing the coupling condition of a filler neck.
FIG. 5 is a cross-sectional view showing the coupling condition of the filler neck.

### DETAILED DESCRIPTION OF THE EXEMPLARY EMBODIMENTS

Referring to the drawings, a piping structure as an embodiment will be described. The embodiment shown below is merely an example, and it is not intended to exclude various modifications and technology applications that are not clearly shown in the embodiment shown below. The structures of the present embodiment may be modified variously when carried out without departing from the scope of the invention as defined by the appended claims.

### [1. Structure]

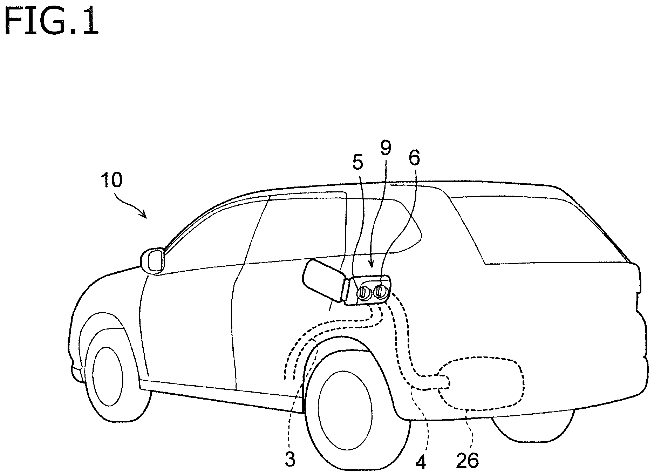

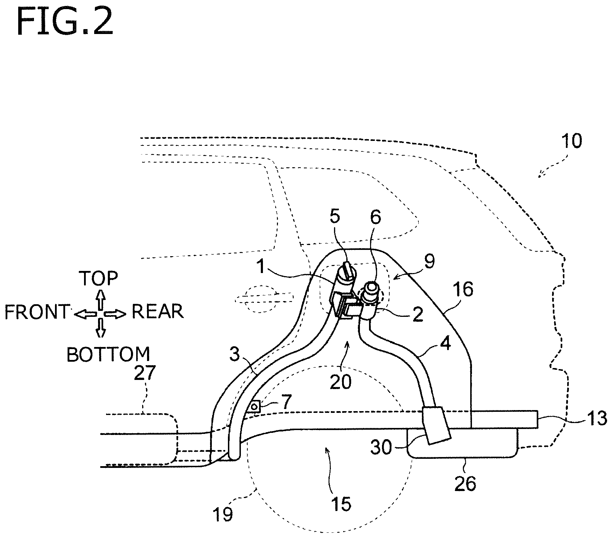

The piping structure of the present embodiment is applied to a vehicle 10 shown in FIG. 1. This vehicle 10 is an engine vehicle or a hybrid vehicle, and is mounted with a urea SCR (selective catalytic reduction) system that reduces the exhaust components of the engine to purify them. An engine of the vehicle 10 is a diesel engine. Below the floor of the vehicle 10, a tank 26 (second tank) storing an additive agent (for example, a urea aqueous solution or an ammonia aqueous solution) for reducing a nitride oxide into nitrogen and a fuel tank 27 (first tank) are disposed. As shown in FIG. 2, the tank 26 of the present embodiment is provided below the floor and is arranged at a rear of a wheel 19 (rear wheel) in the vehicle 10, and the fuel tank 27 is provided below a part of the floor positioned at a front of the rear wheel 19 and is arranged at a front of the tank 26. In FIG. 2, an outer panel 11 in the vehicle 10 is omitted for easily explaining the internal structure of the wheel house of the vehicle 10.

On a side portion (left rear fender in FIG. 1) of the vehicle 10, a box-shaped filler box 9 having an openable and closable lid (lid member) is provided. The filler box 9 is arranged at upper of a wheel house 15 which surrounds and contains the rear wheel 19. The filler box 9 is fixed to the vehicle body in a position where the open surface to which the lid is attached faces the left side surface of the vehicle 10. The shape of the outer surface of the lid is a shape flush with (or a curved surface smoothly connected to) the outer surface of the left rear fender.

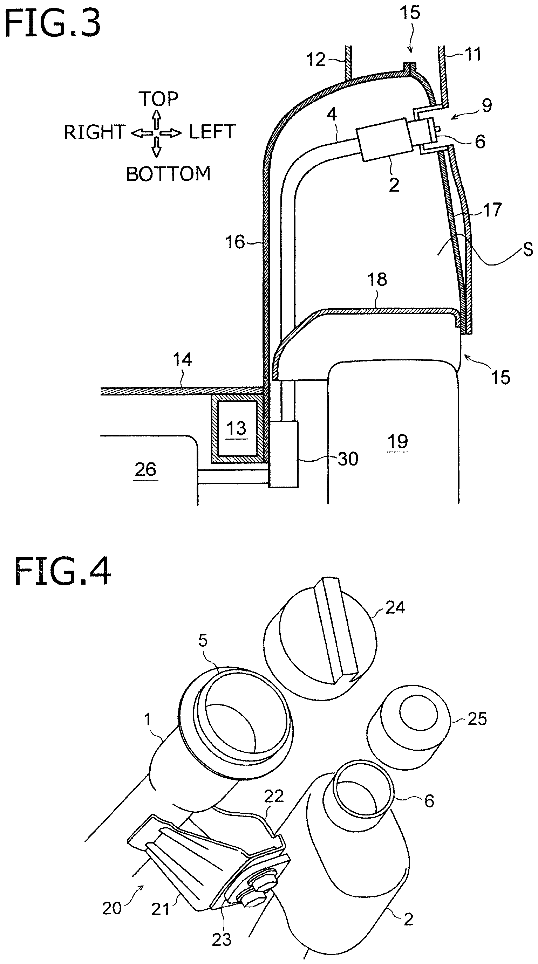

Inside the filler box 9, a first replenishment opening 5 and a second replenishment opening 6 are disposed adjacent to each other. The first replenishment opening 5 is communicated with the fuel tank 27 and is an oil filler opening for replenishing fuel to the fuel tank 27. The second replenishment opening 6 is communicated with the tank 26 and is a water feed opening for replenishing an additive agent to the tank 26. As shown in FIG. 4, to the ends of the first replenishment opening 5 and the second replenishment opening 6, a first cap 24 (oil filler cap) and a second cap 25 (water feed cap) that are detachably attachable are attached, respectively. These caps 24 and 25 are detached by the worker when the fuel or the additive agent is replenished, and attached again after the completion of the replenishment.

As shown in FIG. 2, the first replenishment opening 5 and the fuel tank 27 are connected in a state of communicating with each other through a first filler neck 1 (fuel filler neck) and a first pipe 3 (fuel pipe). The first filler neck 1 is a part connected to the first replenishment opening 5, and is formed in a cylindrical shape slightly larger in diameter than the first pipe 3. The first pipe 3 is routed on the front side of the wheel 19 in the front-rear direction of the vehicle 10 in a space S formed between the wheel house 15 and a splash shield 18 described later.

The first pipe 3 of the present embodiment is, as shown in FIG. 2, routed so as to arc along the outer periphery of the wheel 19 on the front side of the first replenishment opening 5 in a side view. Moreover, the first pipe 3 is connected to the fuel tank 27 disposed below a floor panel 14 on a route passing below a side member 13 in front of the wheel 19. The side member 13 is a member disposed below the wheel house 15 and extended in the front-rear direction of the vehicle 10.

The wheel house 15 is configured as a part of the vehicle 10, is arranged inside the outer panel 11 of the vehicle 10, and is formed in an arch shape covering the upper surface of the wheel 19. The wheel house 15 of the present embodiment is, as shown in FIG. 3, formed of a wheel house inner part 16 and a wheel house outer part 17. The wheel house inner part 16 is a member which is disposed inside the vehicle 10 in the vehicle width direction and is made of a steel plate with high-intensity. The wheel house outer part 17 is a member which is disposed outside the wheel house inner part 16 in the vehicle width direction and is made of a steel plate with high-intensity. When a structure in which the wheel house inner part 16 is directly fixed to the outer panel 11 is adopted, the wheel house outer part 17 may be omitted.

On the wheel 19 side of the wheel house inner part 16 and the wheel house outer part 17 (inside the wheel house 15), the splash shield 18 for protecting the vehicle body from pebbles and muddy water splashed by the wheel 19 is attached. The splash shield 18 is a high-rigidity and high-strength resin-molded article of a shape following the inner shape of the wheel house 15, and is fixed to the wheel house 15 by bolts and nuts, screws, clips or the like. The space S is formed between an inner surface of the wheel house 15 and an upper surface of the splash shield 18.

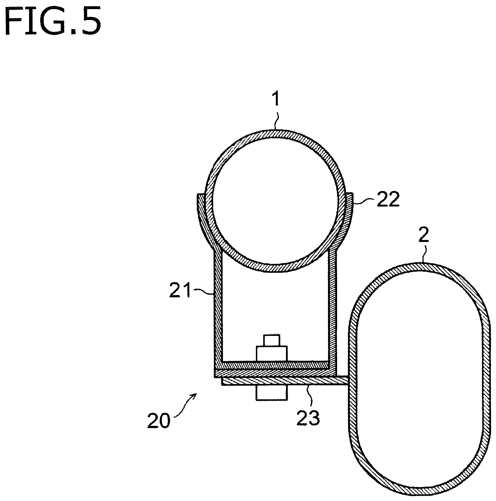

The second replenishment opening 6 and the tank 26 are connected in a state of communicating with each other through a second filler neck 2 (additive agent filler neck) and a second pipe 4 (additive agent pipe). The second filler neck 2 is a part connected to the second replenishment opening 6, and is formed in a shape where the second pipe 4 is connectable to the bottom. On the second filler neck 2, as shown in FIG. 4 and FIG. 5, a flat fixing portion 23 is formed integrally. The second pipe 4 is routed on the rear side of the wheel 19 in the space S between the wheel house 15 and the splash shield 18.

The second pipe 4 of the present embodiment is routed, as shown in FIG. 2, so as to arc along the outer periphery of the wheel 19 on the rear side of the second replenishment opening 6 in a side view. The second pipe 4 is routed between a protector 30 fixed to the side member 13 and the side member 13 in a rear direction of the vehicle so as not to contact both of the protector 30 and the side member 13 behind the wheel 19. The protector 30 is a cover attached so as to cover the bent portion of the second pipe 4 (the portion of the second pipe 4 passing below the side member 13). By the protector 30 being fixed to the side member 13, the second pipe 4 is held on the vehicle body through the protector 30. Moreover, the second pipe 4 is connected to the tank 26 disposed below the floor panel 14 by a route passing below the side member 13 behind the wheel 19.

The first pipe 3 is fixed to the wheel house inner part 16 through a front bracket 7 in front of the wheel 19. As shown in FIG. 2, the fixed position of the front bracket 7 is set to a position slightly above the side member 13.

The first filler neck 1 and the second filler neck 2 are disposed so that the pipe axes thereof are substantially parallel to each other. Moreover, as shown in FIG. 4, between the first filler neck 1 and the second filler neck 2, a neck bracket 20 connecting them is provided. The neck bracket 20 couples the first filler neck 1 and the second filler neck 2 above the wheel 19 in the space S between the wheel house 15 and the splash shield 18. The neck bracket 20 is provided with a structure where it becomes a closed cross section including the peripheral surface of the first filler neck 1 on a plane vertical to the pipe axis of the first filler neck 1. As shown in FIG. 5, the neck bracket 20 includes a first member 21 and a second member 22.

The first member 21 has a shape such that a plate member is bent in a crank form, and one end thereof is fixed to the peripheral surface of the first filler neck 1. The other end thereof is fixed in a state of being superposed on the second member 22. Like the first member 21, the second member 22 has a shape such that a plate member is bent in a crank form, and one end thereof is fixed to the peripheral surface of the first filler neck 1. The fixed position of the second member 22 and the first filler neck 1 is set to a position separated from the fixed position of the first member 21 and the first filler neck 1. The second member 22 of the present embodiment is fixed to the peripheral surface of the first filler neck 1 in a position where the first filler neck 1 is sandwiched between it and the first member 21.

Moreover, as shown in FIG. 5, on a plane vertical to the pipe axis of the first filler neck 1, the shape of the closed cross section surrounded by the peripheral surface of the first filler neck 1, the first member 21 and the second member 22 is trapezoidal (or rectangular). The position of superposition of the first member 21 and the second member 22 is fixed with respect to the fixing portion 23 of the second filler neck 2. The fixing portion 23 can be regarded as part of the neck bracket 20 as well as it can be regarded as part of the second filler neck 2. Therefore, the neck bracket 20 may be formed of three members of the first member 21, the second member 22 and the fixing portion 23.

### [2. Workings and Effects]

[1] In the wheel house 15 of the vehicle 10, the first pipe 3 is routed on the vehicle's front side and the second pipe 4 is routed on the vehicle's rear side. With this piping structure, the first pipe 3 and the second pipe 4 can be effectively disposed by using the space in the wheel house 15, so that the space utilization efficiency and the maintainability can be improved. Moreover, by coupling the two filler necks 1 and 2 by the neck bracket 20, the structural strength of the first pipe 3 and the second pipe 4 can be enhanced.
[2] The first pipe 3 is fixed to the wheel house inner part 16 on the front side of the wheel 19 in the front-rear direction of the vehicle 10, and is not fixed to the body (the outer panel 11 or the inner panel 12) of the vehicle 10. This enables the first pipe 3 to be routed near the inside in the vehicle width direction, so that the first pipe 3 can be routed without increasing the space between the wheel house 15 and the splash shield 18. Since the degree of freedom of the layout of the wheel 19 deteriorates if the space between the wheel house 15 and the splash shield 18 is increased, it is desirable to dispose the splash shield 18 as close to the wheel house 15 as possible. According to the above-described first pipe 3, such a desire can be met. Moreover, the load that can be imposed from outside the vehicle 10 does not readily act on the first pipe 3 directly, so that the protective performance of the first pipe 3 can be enhanced.
[3] The protector 30 is fixed to the side member 13 in a position on the rear side of the wheel 19 in the front-rear direction of the vehicle 10. Since this configuration means that the protector can be fixed to a strong skeleton member (the side member 13), the strength of the protector 30 can be improved. Moreover, by routing the second pipe 4 between the protector 30 and the side member 13 so as not to contact both of the protector 30 and the side member 13, the occurrence of direct vibration transmission from the skeleton member (the side member 13) or the like to the second pipe 4 can be reduced. Further, the second pipe 4 can be protected from contact with an object under the floor, chipping and the like by the protector 30 and the side member 13.
[4] The neck bracket 20 includes two members of the first member 21 and the second member 22. The first member 21 and the second member 22 are fixed to the peripheral surface of the first filler neck 1 so as to sandwich the first filler neck 1, and forms a closed cross section structure including the peripheral surface of the first filler neck 1 as shown in FIG. 5. Moreover, the fixing portion 23 is fixed to the closed cross section structure formed by the first member 21 and the second member 22. By doing this, the first filler neck 1 and the second filler neck 2 can be fixed firmly, so that the support condition of the first pipe 3 and the second pipe 4 can be stabilized.

Moreover, since the above-described closed cross section structure is trapezoidal (or rectangular) on a plane vertical to the pipe axis of the first filler neck 1, the relative displacement of the first pipe 3 and the second pipe 4 can be permitted, so that stress concentration when a load acts can be avoided. Further, since the members (the first member 21 and the second member 22) on the side of the first pipe 3 and the member (the fixing portion 23) on the side of the second pipe 4 are separate members, the assembly of the pipe 3 and the assembly of the pipe 4 can be easily made independent of each other, so that the workability at the time of manufacture of the vehicle can be improved.

### [3. Modifications]

While the above-described embodiment shows as an example a structure in which the first pipe 3 for fuel replenishment is disposed on the front side of the wheel and the second pipe 4 for additive agent replenishment is disposed on the rear side of the wheel, these front and rear positions may be reversed. Moreover, a tank (container) connected to the first pipe 3 or the second pipe 4 may be changed arbitrarily. For example, by disposing the pipes connected to a tank for the engine cooling water and a tank for the window washer liquid inside the wheel house and routing the pipes at a front of and behind the wheel, respectively, a structure similar to the above-described embodiment can be formed.

While a piping structure for replenishing the additive agent of the urea SCR system is described in detail in the above-described embodiment, the kind of additive agent is not limited to the urea water. In an exhaust purification system using an NOx selective reduction catalyst, ammonia is sometimes used instead of urea. Therefore, the above-described tank 26 may be used as an additive agent container storing ammonia aqueous solution.

### [Description of Reference Numerals and Signs]

1 First filler neck
2 Second filler neck
3 First pipe (fuel pipe)
4 Second pipe (additive agent pipe)
5 First replenishment opening (oil filler opening)
6 Second replenishment opening (water feed opening)
10 Vehicle
16 Wheel house inner part
17 Wheel house outer part
20 Neck bracket

## Claims

1. A piping structure for a vehicle (10), comprising:
a first replenishment opening (5) and a second replenishment opening (6) that are provided on a side portion of the vehicle (10);
a first filler neck (1) that connects a first pipe (3) and the first replenishment opening (5) in a space (S) formed between a wheel house (15) and a splash shield (18) of the vehicle (10), the first pipe (3) being routed on a front side of a wheel (19) in a front-rear direction of the vehicle (10);
a second filler neck (2) that connects a second pipe (4) and the second replenishment opening (6) in the space (S), the second pipe (4) being routed on a rear side of the wheel (19) in the front-rear direction of the vehicle (10); and
a neck bracket (20) that couples the first filler neck (1) and the second filler neck (2) above the wheel (19) in the space (S) of the vehicle (10),
wherein the wheel house (15) covers an upper surface of the wheel (19) and the splash shield (18) is attached on the wheel side of the wheel house (15),
wherein the first pipe (3) and the second pipe (4) are routed in the space (S) formed between the wheel house (15) and the splash shield (18).

2. The piping structure for the vehicle (10) according to claim 1, wherein the wheel house (15) is formed of a wheel house inner part (16) disposed inside the vehicle (10) in a vehicle width direction and a wheel house outer part (17) disposed outside the wheel house inner part (16) in the vehicle width direction, the vehicle width direction being perpendicular to the front-rear direction of the vehicle (10); and
wherein the first pipe (3) is fixed to the wheel house inner part (16) in a position on the front side of the wheel (19) in the front-rear direction of the vehicle (10).

3. The piping structure for the vehicle (10) according to claim 1 or 2, further comprising:
a side member (13) that is disposed below the wheel house (15) and is extended in the front-rear direction of the vehicle (10),
wherein the second pipe (4) is routed toward a rear direction of the vehicle (10) so as to pass between a protector (30) fixed to the side member (13) and the side member (13) in a position on the rear side of the wheel (19) in the front-rear direction of the vehicle (10).

4. The piping structure for the vehicle (10) according to any one of claims 1 to 3, wherein the neck bracket (20) has a structure of a closed shape including a peripheral surface of the first filler neck (1) in a cross-sectional view along a plane vertical to a pipe axis of the first filler neck (1),
wherein the closed shape has a trapezoidal shape or rectangular shape.

5. The piping structure for the vehicle (10) according to claim 3, wherein, by the protector (30), the second pipe (4) is held on the side member (13) through the protector (30).

## Patentansprüche

1. Rohrleitungsstruktur für ein Fahrzeug (10), aufweisend:
eine erste Nachfüllöffnung (5) und eine zweite Nachfüllöffnung (6), die auf einem Seitenteil des Fahrzeugs (10) vorgesehen sind;
einen ersten Füllstutzen (1), der ein erstes Rohr (3) und die erste Nachfüllöffnung (5) in einem zwischen einem Radkasten (15) und einem Spritzschutz (18) des Fahrzeugs (10) gebildeten Raum (S) verbindet, wobei das erste Rohr (3) in Vorwärts-Rückwärtsrichtung des Fahrzeugs (10) auf einer vorderen Seite eines Rades (19) geführt ist;
einen zweiten Füllstutzen (2), der ein zweites Rohr (4) und die zweite Nachfüllöffnung (6) in dem Raum (S) verbindet, wobei das zweite Rohr (4) in Vorwärts-Rückwärtsrichtung des Fahrzeugs (10) auf einer hinteren Seite des Rades (19) geführt ist; und
eine Stutzenhalterung (20), die den ersten Füllstutzen (1) und den zweiten Füllstutzen (2) über dem Rad (19) im Raum (S) des Fahrzeugs (10) miteinander koppelt,
wobei der Radkasten (15) eine obere Seite des Rades (19) verdeckt und der Spritzschutz (18) auf der Radseite des Radkastens (15) angebracht ist,
wobei das erste Rohr (3) und das zweite Rohr (4) im Raum (S) geführt sind, der zwischen dem Radkasten (15) und dem Spritzschutz (18) gebildet ist.

2. Rohrleitungsstruktur für das Fahrzeug (10) nach Anspruch 1, wobei der Radkasten (15) aus einem Radkasteninnenteil (16), das in einer Fahrzeugbreitenrichtung innen im Fahrzeug (10) angeordnet ist, und einem Radkastenaußenteil (17), das in Fahrzeugbreitenrichtung außerhalb des Radkasteninnenteils (16) angeordnet ist, wobei die Fahrzeugbreitenrichtung senkrecht zur Vorwärts-Rückwärtsrichtung des Fahrzeugs (10) verläuft, gebildet ist; und
wobei das erste Rohr (3) am Radkasteninnenteil (16) in Vorwärts-Rückwärtsrichtung des Fahrzeugs (10) in einer Position auf der vorderen Seite des Rades (19) befestigt ist.

3. Rohrleitungsstruktur für das Fahrzeug (10) nach Anspruch 1 oder 2, ferner aufweisend:
ein Seitenelement (13), das unter dem Radkasten (15) angeordnet und in Vorwärts-Rückwärtsrichtung des Fahrzeugs (10) verlängert ist,
wobei das zweite Rohr (4) zu einer hinteren Richtung des Fahrzeugs (10) geführt ist, so dass es zwischen einer auf dem Seitenelement (13) befestigten Schutzvorrichtung (30) und dem Seitenelement (13) in Vorwärts-Rückwärtsrichtung des Fahrzeugs (10) in eine Position auf der hinteren Seite des Rades (19) hindurchführt.

4. Rohrleitungsstruktur für das Fahrzeug (10) nach einem der Ansprüche 1 bis 3, wobei die Stutzenhalterung (20) eine Struktur einer geschlossenen Form aufweist, die eine Mantelfläche des ersten Füllstutzens (1) in Querschnittsansicht entlang einer senkrecht zur Rohrachse des ersten Füllstutzens (1) angeordneten Ebene einschließt,
wobei die geschlossene Form eine Trapez- oder Rechteckform aufweist.

5. Rohrleitungsstruktur für das Fahrzeug (10) nach Anspruch 3, wobei das zweite Rohr (4) von der Schutzvorrichtung (30) durch die Schutzvorrichtung (30) hindurch auf dem Seitenelement (13) gehalten ist.

## Revendications

1. Structure de tuyauterie pour un véhicule (10), comprenant :
une première ouverture de réapprovisionnement (5) et une seconde ouverture de réapprovisionnement (6) qui sont prévues sur une portion latérale du véhicule (10) ;
un premier goulot de remplissage (1) qui relie un premier tuyau (3) et la première ouverture de réapprovisionnement (5) dans un espace (S) formé entre un passage de roue (15) et un garde-boue (18) du véhicule (10), le premier tuyau (3) étant acheminé sur un côté avant d'une roue (19) dans une direction avant-arrière du véhicule (10) ;
un second goulot de remplissage (2) qui relie un second tuyau (4) et la seconde ouverture de réapprovisionnement (6) dans l'espace (S), le second tuyau (4) étant acheminé sur un côté arrière de la roue (19) dans la direction avant-arrière du véhicule (10) ; et
un support de goulots (20) qui accouple le premier goulot de remplissage (1) et le second goulot de remplissage (2) au-dessus de la roue (19) dans l'espace (S) du véhicule (10),
dans laquelle le passage de roue (15) couvre une surface supérieure de la roue (19) et le garde-boue (18) est fixé sur le côté roue du passage de roue (15),
dans laquelle le premier tuyau (3) et le second tuyau (4) sont acheminés dans l'espace (S) formé entre le passage de roue (15) et le garde-boue (18).

2. Structure de tuyauterie pour le véhicule (10) selon la revendication 1, dans laquelle le passage de roue (15) est constitué d'une partie intérieure de passage de roue (16) disposée à l'intérieur du véhicule (10) dans une direction de largeur de véhicule et une partie extérieure de passage de roue (17) disposée à l'extérieur de la partie intérieure de passage de roue (16) dans la direction de largeur de véhicule, la direction de largeur de véhicule étant perpendiculaire à la direction avant-arrière du véhicule (10) ; et
dans laquelle le premier tuyau (3) est fixé à la partie intérieure de passage de roue (16) dans une position sur le côté avant de la roue (19) dans la direction avant-arrière du véhicule (10).

3. Structure de tuyauterie pour le véhicule (10) selon la revendication 1 ou 2, comprenant en outre :
un élément latéral (13) qui est disposé en dessous du passage de roue (15) et est étendu dans la direction avant-arrière du véhicule (10),
dans laquelle le second tuyau (4) est acheminé vers une direction arrière du véhicule (10) de manière à passer entre un protecteur (30) fixé à l'élément latéral (13) et l'élément latéral (13) dans une position sur le côté arrière de la roue (19) dans la direction avant-arrière du véhicule (10).

4. Structure de tuyauterie pour le véhicule (10) selon l'une quelconque des revendications 1 à 3, dans laquelle le support de goulots (20) a une structure d'une forme fermée comportant une surface périphérique du premier goulot de remplissage (1) dans une vue en coupe transversale le long d'un plan vertical à un axe de tuyau du premier goulot de remplissage (1),
dans laquelle la forme fermée a une forme trapézoïdale ou une forme rectangulaire.

5. Structure de tuyauterie pour le véhicule (10) selon la revendication 3, dans laquelle le second tuyau (4) est maintenu par le protecteur (30) sur l'élément latéral (13) à travers le protecteur (30).
